# EUROPÄISCHE PATENTSCHRIFT

(11) **EP 1 254 822 B1**
(45) Veröffentlichungstag und Bekanntmachung des Hinweises auf die Patenterteilung: **28.07.2004**
(21) Anmeldenummer: 02009215.1
(22) Anmeldetag: 25.04.2002
(51) Int. Cl.: B62B 3/02

(54) **Transportgerät mit Klappboden**
Transport trolley with folding bottom
Chariot transport avec fond pliable

(30) Priorität: 04.05.2001 DE 10121797
(43) Veröffentlichungstag der Anmeldung: 06.11.2002
(73) Patentinhaber: Cordes GmbH & Co. KG, 21698 Harsefeld (DE)
(72) Erfinder: Krüger, Udo, 39624 Jeetze (DE)
(74) Vertreter: Philipp, Matthias, Dr.

(56) Entgegenhaltungen:
- EP-A- 0 679 562
- EP-A- 0 739 805
- GB-A- 2 261 410
- US-A- 2 903 269
- US-A- 3 245 498

## Beschreibung

Die Erfindung betrifft ein Transportgerät mit einem Grundgestell gemäß dem Oberbegriff des Anspruchs 1, wie es von der US-A-3,245,498 gezeigt wird.

Aus der Praxis sind Transportgeräte nach Art eines Rollcontainers mit einem rechteckigen Grundgestell und gitterartigen Seitenwänden bekannt, bei denen der Boden um eine entlang eine seiner Seitenkanten verlaufende Schwenkachse aus der horizontalen Transportstellung in eine vertikale Lagerungsstellung bewegbar ist, wobei aus ergonomischen Gründen die Bewegung des meist relativ schweren Bodens aus der horizontalen Transportstellung anfangs durch eine Feder unterstützt wird, die als Spiralfeder ausgebildet ist und einerseits in einem oberen Bereich einer Seitenwand des Transportgeräts und andererseits an einem von der Schwenkachse beabstandeten Punkt des Bodens angelenkt ist. Die Feder ist in der Transportstellung des Bodens vorgespannt und erleichtert - nach Lösen einer Verriegelung - die anfängliche Hochklappbewegung.

Diese Lösung ist in mehrfacher Hinsicht unbefriedigend. Zum einen kann es bei rauher Handhabung des Containers, die im alltäglichen Betrieb nicht selten ist, zu Beschädigungen der Anlenkung der Feder kommen, so daß eine Verletzungsgefahr beim Abreißen dieser Anlenkpunkte besteht. Außerdem geht Nutzbreite bzw. -tiefe des Containers verloren, da die Feder einen bestimmten Platzbedarf hat.

Die Aufgabe der Erfindung besteht darin, ein Transportgerät der beschriebenen Gattung dahingehend zu verbessern, daß auch bei rauher Handhabung keinerlei Beschädigungsgefahr der Feder und damit auch keinerlei Verletzungsgefahr mehr verbunden ist.

Die Lösung erfolgt gemäß dem kennzeichnenden Teil des Anspruchs 1. Bevorzugte Ausführungsformen ergeben sich aus den Underansprüchen.

Bevorzugt liegt die Schwenkachse horizontal, wobei die Transportstellung horizontal und die Lagerungsstellung im wesentlichen vertikal ist.

Das Transportgerät kann ein Rollcontainer mit einem rechteckigen Grundgestell und Seitenwänden sein.

Zweckmäßigerweise weist das Grundgestell einen Metallprofilrahmen auf. Auch der Boden weist vorzugsweise einen Metallprofilrahmen mit einer daran gehaltenen Tragplatte auf.

Boden und Grundgestell können in Richtung der Schwenkachse fluchtende Scharnierhülsen aufweisen, die den Torsionsstab aufnehmen.

Zweckmäßigerweise ist der Torsionsstab an einem Endabschnitt drehfest mit dem Boden und an einem anderen Endabschnitt drehfest mit dem Grundgestell verbunden.

Der Torsionsstab kann einen geraden Mittelabschnitt und zwei von diesem abgewinkelte Endabschnitte aufweisen, wobei die Endabschnitte in entsprechende Aufnahmen von Boden und Grundgestell eingreifen.

Die Endabschnitte können um 90° gegenüber dem Mittelabschnitt abgewinkelt sein.

In einer bevorzugten Ausführungsform ist vorgesehen, daß der Torsionsstab runden Querschnitt aufweist.

In Ausgestaltung der Erfindung kann vorgesehen sein, daß mehrere axial in Reihe angeordnete Torsionsstäbe vorhanden sind. Die abgewinkelten Endabschnitte des bzw. jedes Torsionsstabs können im unbelasteten Zustand in einer Ebene liegen. Alternativ kann vorgesehen sein, daß ein abgewinkelter Endabschnitt des bzw. jedes Torsionsstabs im unbelasteten Zustand aus einer durch den Mittelabschnitt und den anderen Endabschnitt festgelegten Ebene abgewinkelt ist.

Die Erfindung wird nachfolgend anhand eines Ausführungsbeispiels unter Bezugnahme auf eine Zeichnung erläutert, wobei
Fig. 1 eine Draufsicht auf eine erfindungsgemäße Torsionsstabfeder zeigt, wobei die Verbindung zu Boden und Grundgestell eines Transportgeräts durch Scharnierhülsen angedeutet ist;
Fig. 2 eine seitliche Draufsicht auf die Anordnung nach Fig. 2 zeigt; und
Fig. 3 eine auszugsweise Schnittansicht eines Transportgeräts im Bereich der Torsionsfeder zeigt.

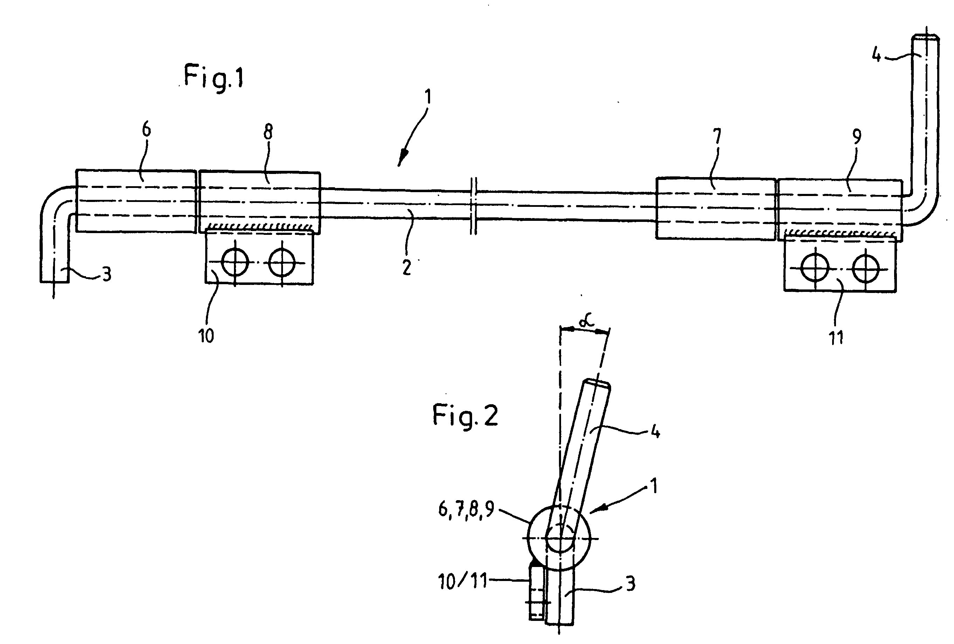

Fig. 1 zeigt eine Draufsicht auf eine im ganzen mit 1 bezeichnete Torsionsfeder, die einen geraden Mittelabschnitt 2 sowie einen ersten 3 und einen zweiten abwinkelten Endabschnitt 4 aufweist. Wie Fig. 2 erkennen läßt, liegen die abgewinkelten Endabschnitte 3, 4 nicht in einer gemeinsamen Ebene mit dem Mittelabschnitt 2, sondern sind um einen Vorspannwinkel α gegeneinander versetzt angeordnet, so daß die Torsionsfeder 1 dann, wenn sich die Endabschnitte und der Mittelabschnitt in einer Ebene befinden, eine Vorspannung aufweist.

Der Mittelabschnitt 2 der Torsionsfeder 1 ist an ersten Scharnierhülsen 6, 7 an einem nicht dargestellten Grundgestell des Transportgeräts gelagert, das aus einem Metallprofilrahmen bestehen kann, an dem die Scharnierhülsen 6, 7 angeschweißt sind.

Zweite Scharnierhülsen 8, 9 dienen zur schwenkbaren Befestigung eines ebenfalls nicht dargestellten Bodens, der als Metallprofilrahmen mit einer daran gehaltenen Tragplatte z.B. aus Holz oder Kunststoff bestehen kann. Der Boden ist an Befestigungsplatten 10, 11 angeschraubt, die mit den zweiten Scharnierhülsen 8, 9 verschweißt sind.

Der erste Endabschnitt 3 der Torsionsfeder 1 greift in eine Aufnahmebohrung des Bodenrahmens, während der zweite Endabschnitt 4 der Torsionsfeder in eine entsprechende Aufnahmebohrung des Grundgestells greift. Beim Verschwenken des Bodens werden die Endabschnitte 3, 4 gegeneinander verdreht und somit die Torsionsfeder 1 tordiert, so daß ein um die Längsachse der Torsionsfeder bzw. des Mittelabschnitts 2 wirkendes Drehmoment resultiert. Wenn die Torsionsfeder 1 so ausgebildet ist, daß die Endabschnitte 3, 4 in einem unbelasteten Ausgangszustand nicht in einer Ebene liegen, sondern einen vorbestimmten Winkel zueinander einnehmen, kann durch entsprechende Auslegung dieses Winkels eine bestimmte Vorspannkraft erreicht werden, so daß sich der Boden nach Lösen einer nicht dargestellten Verriegelung ausgehend von seiner horizontalen Transportstellung in Richtung auf seine vertikale Lagerungsstellung bewegt und dann relativ leicht von Hand in die Lagerungsstellung gebracht werden kann.

Anstelle einer einzigen Torsionsfeder mit durchgehendem Mittelabschnitt können mehrere axial in Reihe angeordnete Torsionsfedern verwendet werden, deren Endabschnitte abwechselnd in den Boden und in das Grundgestell eingreifen.

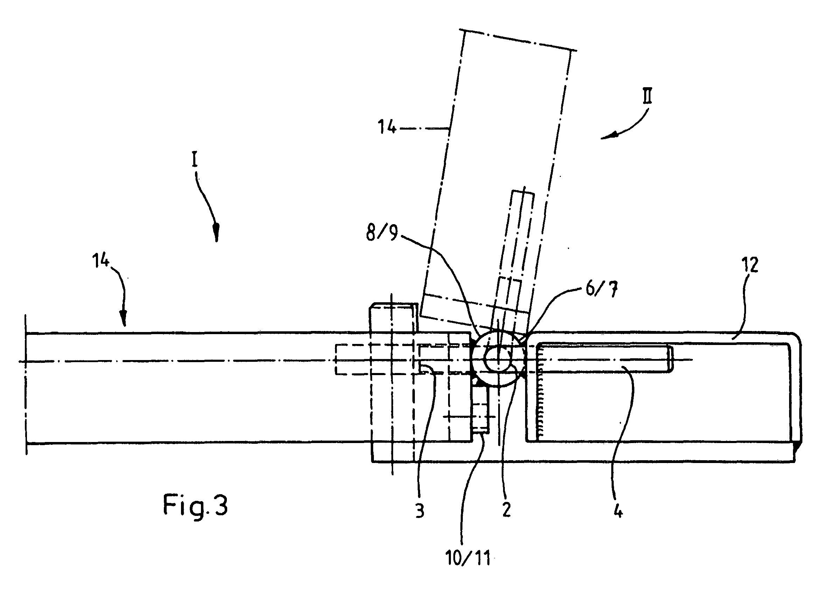

Fig. 3 zeigt eine schematische seitliche Draufsicht, ähnlich Fig. 2, wobei der Metallprofilrahmen 12 des Grundgestells sowie der Boden 14 in Transportstellung I und Lagerungsstellung II dargestellt sind.

### Bezugszeichenliste

- 1: Torsionsfeder
- 2: Mittelabschnitt
- 3: erster Endabschnitt
- 4: zweiter Endabschnitt
- 6, 7: erste Scharnierhülse
- 8, 9: zweite Scharnierhülse
- 10, 11: Befestigungsplatte
- 12: Rahmen des Grundgestells
- 14: Boden
- I: Transportstellung
- II: Lagerungsstellung
- α: Vorspannwinkel

## Patentansprüche

1. Transportgerät mit einem Grundgestell (12), an dem ein Boden (14) um eine Schwenkachse zwischen einer Transportstellung (I) und einer Lagerungsstellung (II) bewegbar ist, wobei an dem Boden (14) eine Feder (1) angelenkt ist, die in der Transportstellung (I) in Richtung auf die Lagerungsstellung (II) vorgespannt ist und als Torsionsfeder (1) ausgebildet ist, **dadurch gekennzeichnet, daß** die Feder einen Torsionsstab (2) aufweist, der gleichzeitig die Schwenkachse des Bodens (14) bildet, wobei der Torsionsstab (2) einerseits an dem Grundgestell (12) und andererseits an dem Boden (14) drehbar gelagert ist.

2. Transportgerät nach Anspruch 1, **dadurch gekennzeichnet, daß** die Schwenkachse horizontal liegt, wobei die Transportstellung (I) horizontal und die Lagerungsstellung (II) im wesentlichen vertikal ist.

3. Transportgerät nach Anspruch 1 oder 2, **dadurch gekennzeichnet, daß** das Transportgerät ein Rollcontainer mit einem rechteckigen Grundgestell und Seitenwänden ist.

4. Transportgerät nach einem der vorangehenden Ansprüche, **dadurch gekennzeichnet, daß** das Grundgestell einen Metallprofilrahmen (12) aufweist.

5. Transportgerät nach einem der vorangehenden Ansprüche, **dadurch gekennzeichnet, daß** der Boden (14) einen Metallprofilrahmen mit einer daran gehaltenen Tragplatte aufweist.

6. Transportgerät nach einem der vorangehenden Ansprüche, **dadurch gekennzeichnet, daß** Boden (14) und Grundgestell in Richtung der Schwenkachse fluchtende Scharnierhülsen (6, 7; 8, 9) aufweisen, die den Torsionsstab (2) aufnehmen.

7. Transportgerät nach einem der vorangehenden Ansprüche, **dadurch gekennzeichnet, daß** der Torsionsstab (2) an einem Endabschnitt (3) drehfest mit dem Boden (14) und an einem anderen Endabschnitt (4) drehfest mit dem Grundgestell (12) verbunden ist.

8. Transportgerät nach Anspruch 7, **dadurch gekennzeichnet, daß** der Torsionsstab einen geraden Mittelabschnitt (2) und zwei abgewinkelte Endabschnitte (3, 4) aufweist, wobei die Endabschnitte in entsprechende Aufnahmen von Boden (14) und Grundgestell (12) eingreifen.

9. Transportgerät nach Anspruch 8, **dadurch gekennzeichnet, daß** die Endabschnitte (3, 4) um 90° gegenüber dem Mittelabschnitt (2) abgewinkelt sind.

10. Transportgerät nach einem der vorangehenden Ansprüche, **dadurch gekennzeichnet, daß** der Torsionsstab runden Querschnitt aufweist.

11. Transportgerät nach einem der vorangehenden Ansprüche, **dadurch gekennzeichnet, daß** mehrere axial in Reihe angeordnete Torsionsstäbe vorhanden sind.

12. Transportgerät nach einem der Ansprüche 8 bis 11, **dadurch gekennzeichnet, daß** die abgewinkelten Endabschnitte (3, 4) des (jedes) Torsionsstabs im unbelasteten Zustand in einer Ebene liegen.

13. Transportgerät nach einem der Ansprüche 8 bis 11, **dadurch gekennzeichnet, daß** ein abgewinkelter Endabschnitt (4) des (jedes) Torsionsstabs im unbelasteten Zustand aus einer durch den Mittelabschnitt (2) und den anderen Endabschnitt (3) festgelegten Ebene abgewinkelt ist.

## Claims

1. A transportation device comprising a base frame (12) on which a floor (14) is movable about a pivot axis between a transportation position (I) and a storage position (II), there being articulated on the floor (14) a spring (1) which in the transportation position (I) is prestressed in the direction of the storage position (II) and is constructed as a torsion spring (1), **characterised in that** the spring comprises a torsion bar (2) which simultaneously forms the pivot axis of the floor (14), the torsion bar (2) being mounted rotatably on the one hand on the base frame (12) and on the other hand on the floor (14).

2. A transportation device according to claim 1, **characterised in that** the pivot axis is horizontal, the transportation position (I) being horizontal and the storage position (II) being substantially vertical.

3. A transportation device according to claim 1 or 2, **characterised in that** the transportation device is a roll-on roll-off container with a rectangular base frame and side walls.

4. A transportation device according to any one of the preceding claims, **characterised in that** the base frame comprises a metal profile frame (12).

5. A transportation device according to any one of the preceding claims, **characterised in that** the floor (14) comprises a metal profile frame with a support plate held thereon.

6. A transportation device according to any one of the preceding claims, **characterised in that** the floor (14) and base frame comprise hinge sleeves (6, 7; 8, 9) which are in alignment in the direction of the pivot axis and which accommodate the torsion bar (2).

7. A transportation device according to any one of the preceding claims, **characterised in that** the torsion bar (2) is connected at one end portion (3) non-rotatably to the floor (14) and at another end portion (4) non-rotatably to the base frame (12).

8. A transportation device according to claim 7, **characterised in that** the torsion bar comprises a straight middle portion (2) and two angled end portions (3, 4), the end portions engaging in corresponding sockets of the floor (14) and base frame (12).

9. A transportation device according to claim 8, **characterised in that** the end portions (3, 4) are angled 90° with respect to the middle portion (2).

10. A transportation device according to any one of the preceding claims, **characterised in that** the torsion bar is of round cross-section.

11. A transportation device according to any one of the preceding claims, **characterised in that** there are a plurality of torsion bars disposed axially in series.

12. A transportation device according to any one of claims 8 to 11, **characterised in that** the angled end portions (3, 4) of the (each) torsion bar are situated in one plane in the unloaded state.

13. A transportation device according to any one of claims 8 to 11, **characterised in that** an angled end portion (4) of the (each) torsion bar in the unloaded state is angled out of a plane fixed by the middle portion (2) and the other end portion (3).

## Revendications

1. Appareil de transport avec un châssis de base (12), sur lequel un fond (14) est mobile autour d'un axe de pivotement entre une position de transport (I) et une position d'entreposage (II), où un ressort (1) est articulé sur le fond (14), qui est sollicité dans la position de transport (I) vers la position d'entreposage (II) et qui est réalisé sous la forme d'un ressort à torsion (I) ; **caractérisé en ce que** le ressort présente une barre de torsion (2) qui constitue en même temps l'axe de rotation du fond (14), et **en ce que** la barre de torsion (2) est logée en rotation, d'une part, sur le châssis de base (12) et, d'autre part, sur le fond (14).

2. Appareil de transport selon la revendication 1, **caractérisé en ce que** l'axe de pivotement est disposé horizontalement, de sorte que la position de transport (I) est horizontale et la position d'entreposage (II) est sensiblement verticale.

3. Appareil de transport selon la revendication 1 ou la revendication 2, **caractérisé en ce que** l'appareil de transport est un conteneur roulant avec un châssis de base rectangulaire et des parois latérales.

4. Appareil de transport selon l'une des revendications précédentes, **caractérisé en ce que** le châssis de base présente un cadre en profilés métalliques (12).

5. Appareil de transport selon l'une des revendications précédentes, **caractérisé en ce que** le fond (14) présente un cadre en profilés métalliques portant un plateau de support.

6. Appareil de transport selon l'une des revendications précédentes, **caractérisé en ce que** le fond (14) et le châssis de base présentent des manchons d'articulation (6, 7 ; 8, 9) alignés sur la direction de l'axe de pivotement et recevant la barre de torsion (2).

7. Appareil de transport selon l'une des revendications précédentes, **caractérisé en ce que** la barre de torsion (2) est fixe en rotation, au niveau d'une section d'extrémité (3) par rapport au fond (14) et au niveau d'une autre section d'extrémité (4), par rapport au châssis de base (12).

8. Appareil de transport selon la revendication 7, **caractérisé en ce que** la barre de torsion présente une section médiane droite (2) et deux sections d'extrémité (3, 4) formant des coudes et où les sections d'extrémité sont engagées dans des logements correspondants du fond (14) et du châssis de base (12).

9. Appareil de transport selon la revendication 8, **caractérisé en ce que** les sections d'extrémité (3, 4) sont disposées à 90 ° par rapport à la section médiane (2).

10. Appareil de transport selon l'une revendications précédentes, **caractérisé en ce que** la barre de torsion a une section transversale qui est ronde.

11. Appareil de transport selon l'une des revendications précédentes, **caractérisé en ce que** plusieurs barres de torsion sont prévues et qu'elles sont disposées axialement en ligne.

12. Appareil de transport selon l'une des revendications 8 à 11, **caractérisé en ce que** les sections d'extrémité coudées (3, 4) de la barre / de chaque barre de torsion sont dans le même plan lorsqu'elles sont dans un état non sollicité.

13. Appareil de transport selon l'une des revendications 8 à 11, **caractérisé en ce que** la section d'extrémité coudée (4) de la barre / de chaque barre de torsion dans l'état non sollicité forme un angle par rapport au plan défini par la section médiane (2) et l'autre section d'extrémité (3).
